# EUROPEAN PATENT APPLICATION

(11) **EP 2 722 372 A1**
(43) Date of publication of application: **23.04.2014**
(21) Application number: 12799839.1
(22) Date of filing: 15.06.2012
(51) Int. Cl.: C09D 11/00, B41J 2/01, B41M 5/00

(54) **PHOTOCURABLE INK JET INK**

(30) Priority: 17.06.2011 JP 2011135612
(71) Applicant: Konica Minolta, Inc., Tokyo 100-7015 (JP)
(72) Inventor: OMATA, Takenori, Tokyo 100-7015 (JP); KAWASHIMA, Kouki, Tokyo 100-7015 (JP); NAKAMURA, Masaki, Tokyo 100-7015 (JP); TOEDA, Takayuki, Tokyo 100-7015 (JP)
(74) Representative: Gille Hrabal
(86) International application number: PCT/JP2012/003929
(87) International publication number: WO 2012/172816

(57) **Abstract**

Provided is a photocurable ink jet ink, which contains maleimide compounds and with which low-temperature precipitation is controlled. In concrete terms, provided is a photocurable ink jet ink containing a first maleimide compound represented by general formula (1), a second maleimide compound having a chemical structure different from the first maleimide compound, and at least one butene diacid derivative.
[Formula 1]

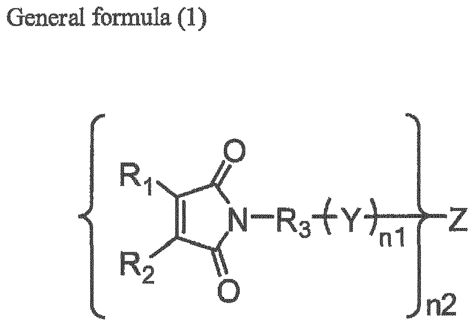

## Description

### Technical Field

The present invention relates to a photocurable inkjet ink.

### Background Art

Maleimide compounds are sometimes blended in a photocurable composition as a monomer or a crosslinker. A polymerization reaction called a charge transfer complex polymerization (CT polymerization), for example, is a polymerization reaction carried out with a combination of an electron rich donor monomer including vinyl ethers with an electron deficient monomer such as maleic anhydride or maleimide.

Various derivatives have been proposed as a maleimide compound to be blended in a photocurable composition (see PTL 1). PTL 1 proposes a polyvalent maleimide compound that is liquid at normal temperature and generates a curing reaction by a practical light intensity/irradiation quantity of light and a photocurable resin composition including the polyvalent maleimide compound. PTL 1 states that the photocurable composition is suitable for inks for gravure printing or the like.

### Citation List

### Patent Literature

### PTL 1

Japanese Patent Application Laid-Open No. 11-124403

### Summary of Invention

### Technical Problem

The present inventors have made a study on using a maleimide compound for inkjet inks. The viscosity of inkjet inks needs to be low in order to make ejection by an inkjet head easy. However, a photocurable compound including a maleimide compound described in PTL 1 has had a high viscosity. Therefore, the photocurable compound has had difficulty in ejection by an inkjet head and has not been suitable for inkjet inks.

It is thought as a method of using a maleimide compound for inkjet inks to use a low molecular weight maleimide compound. However, since using relatively high molecular weight curable monomers is preferred to using low molecular weight curable monomers from the viewpoint of safety or the like, it is not preferable to just simply use a low molecular weight maleimide compound for a curable composition.

Moreover, since maleimide compounds in general have a high crystallinity, a problem in an ink including a maleimide compound is that the maleimide compound is crystallized and is easy to be precipitated at a low temperature. Photocurable compositions including a maleimide compound are sometimes shipped by air when sold overseas and are exposed to a low temperature of about -20°C when shipped by air or sold overseas, and the maleimide compound is sometimes precipitated. The maleimide compound once precipitated is difficult to be redissolved even when the temperature is brought back to normal temperature. Therefore, a problem when a photocurable composition including a maleimide compound is used as an inkjet ink has been that the composition cannot be used as an inkjet ink because clogging of nozzles occurs. Particularly, since a relatively high molecular weight maleimide compound is easier to be precipitated, it has been increasingly required to be able to suppress the precipitation of a maleimide compound at a low temperature. Namely, it is required in inkjet inks to use a relatively high molecular weight maleimide compound that is difficult to be precipitated. However, since a maleimide compound having such performance is not known, applications of maleimide compounds to a wide range of printing fields including inkjet inks are hampered.

The present invention has been made in consideration of the above circumstances, and an object of the present invention is to provide a photocurable inkjet ink including a maleimide compound in which precipitation at a low temperature is suppressed.

### Solution to Problem

The present inventors have found that the crystallinity of a maleimide compound can be lowered by adding to a maleimide compound as a main component (a first maleimide compound) a second maleimide compound having a structure different from that of the first maleimide compound or a derivative of butenedioic acid. Thereby, the present inventors have found that the precipitation of the first maleimide compound at a low temperature can be suppressed. The present invention has been made based on such findings.

[1] A photocurable inkjet ink including a first maleimide compound represented by the following general formula (1) and at least one of a second maleimide compound having a chemical structure different from that of the first maleimide compound and a derivative of butenedioic acid. 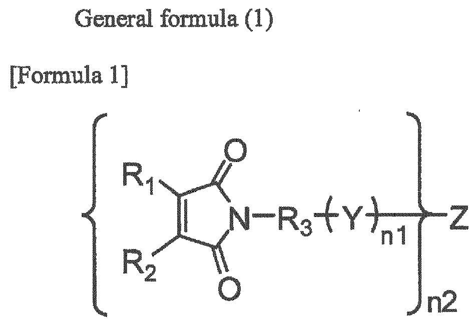 In the general formula (1),
   R₁ and R₂ each independently represent a hydrogen atom or a C₁₋₆ alkyl group, and R₁ and R₂ may combine with each other to form a ring;
   R₃ represents an alkylene group having a chain carbon number of 1 to 3;
   Y represents a divalent linking group selected from the group consisting of -O-, -(C=O)-, -O-(C=O)-, -(C=O)-O-, -OR₄-, -R₄-O-(C=O)-, -(C=O)-O-R₄-, -O-(C-O)-R₄-(C=O)-O-, and -(C=O)-O-R₄-O-(C=O)- where R₄ represents a C₁₋₁₂ alkylene group or a C₆₋₁₈ arylene group;
   n1 represents 0 or 1;
   n2 represents a natural number from 1 to 6;
   when n2 is 1, Z represents an alkyl group having a molecular weight of 15 to 600, an alkyloxy group having a molecular weight of 31 to 600, or an aryl group; and
   when n2 is 2 to 6, Z represents an alkylene group having a molecular weight of 14 to 600, or an alkyleneoxy group having a molecular weight of 30 to 600, or an arylene group.
[2] The photocurable inkjet ink according to [1], in which when a melting point of the first maleimide compound is defined as Tm1 (°C), and a melting point of a mixture obtained by mixing the first maleimide compound and at least one of the second maleimide compound and the derivative of butenedioic acid at the same ratio as a content ratio of the first maleimide compound contained in the photocurable inkjet ink to at least one of the second maleimide compound and the derivative of butenedioic acid contained in the photocurable inkjet ink is defined as Tm2 (°C), a difference of the melting points ΔTm (Tm1 - Tm2) is 40°C or more.
[3] The photocurable inkjet ink according to [1] or [2], in which R₃ in the general formula (1) has an asymmetric carbon atom in an α position or a β position relative to a nitrogen atom constituting a maleimide ring.
[4] The photocurable inkjet ink according to any one of [1] to [3], in which in the general formula (1)
   R₃ has an asymmetric carbon atom in an α position or a β position relative to a nitrogen atom constituting a maleimide ring;
   Y represents -O-(C=O)- or -(C=O)-O-;
   n1 represents 1;
   n2 represents 1 or 2;
   when n2 is 1, Z represents an alkyl group having a molecular weight of 15 to 600, or an alkyloxy group having a molecular weight of 31 to 600; and
   when n2 is 2, Z represents an alkylene group having a molecular weight of 14 to 600, or an alkyleneoxy group having a molecular weight of 30 to 600.
[5] The photocurable inkjet ink according to any one of [1] to [4], in which the first maleimide compound has a molecular weight of 420 or more.
[6] The photocurable inkjet ink according to any one of [1] to [5], in which the second maleimide compound is a maleimide compound represented by the general formula (1).
[7] The photocurable inkjet ink according to any one of [1] to [6], in which the second maleimide compound is a mixture of two or more of the second maleimide compounds.
[8] The photocurable inkjet ink according to any one of [1] to [7], in which a total amount of the second maleimide compound and the derivative of butenedioic acid is 5 to 30 mol% based on the first maleimide compound.
[9] The photocurable inkjet ink according to any one of [1] to [8], in which a total amount of the first maleimide compound, the second maleimide compound, and the derivative of butenedioic acid is 35 to 65 wt% based on the photocurable inkjet ink.
[10] The photocurable inkjet ink according to any one of [1] to [9], further including at least a polymerizable compound, in which the polymerizable compound is a vinyl ether compound or a N-vinyl compound.

### Advantageous Effects of Invention

According to the present invention, a photocurable inkjet ink including a maleimide compound in which precipitation of the maleimide compound at a low temperature is suppressed can be provided.

### Description of Embodiments

A photocurable inkjet ink according to the present invention includes a first maleimide compound and at least one of a second maleimide compound having a structure different from that of the first maleimide compound and a derivative of butenedioic acid (preferably the second maleimide compound).

### First Maleimide Compound

The first maleimide compound contained in the photocurable inkjet inks according to the present invention is represented by the following general formula (1).

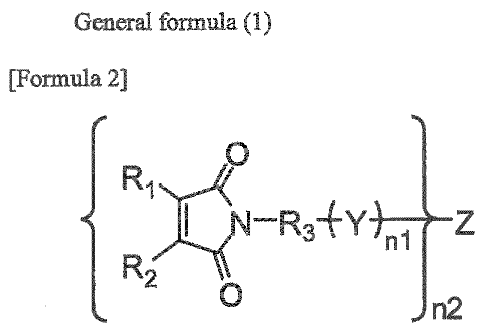

R₁ and R₂ in the general formula (1) each independently represent a hydrogen atom or a C₁₋₆ alkyl group. Examples of the C₁₋₆ alkyl group may include a methyl group, an ethyl group, a propyl group, a butyl group, a pentyl group, and a hexyl group. Moreover, R₁ and R₂ may be linked to each other to form a hydrocarbon ring such as a cyclobutylene ring, a cyclopentene ring, or a cyclohexene ring. R₁ and R₂, preferably, each independently represent a hydrogen atom or a methyl group.

R₃ in the general formula (1) represents an alkylene group having a number of chain carbon atoms of 1 to 3. The number of chain carbon atoms means the number of carbon atoms constituting a main chain of an alkylene group as a linking group, and does not include the number of carbon atoms of a side chain bonded to the main chain. It is preferable that R₃ has a number of chain carbon atoms of 1 to 2, more preferably 1.

It is preferable that R₃ has an asymmetric carbon atom. The reason is that since the crystallinity of a maleimide compound having an asymmetric carbon atom is lowered by the presence of the asymmetric carbon atom, the maleimide compound can not only reduce the viscosity of an ink but also suppress precipitation at a low temperature. It is preferable that the asymmetric carbon atom contained in R₃ is in an α position or a β position relative to the nitrogen atom constituting the maleimide ring in the general formula (1), more preferably in an α position from the standpoint that it is easy to obtain the aforementioned action.

A binding state of the asymmetric carbon atom contained in R₃ is expressed, for example, by the following formula. In the following formula, C* represents an asymmetric carbon atom.

-C*HX- [Formula 3]

X that is bonded to the asymmetric carbon atom represents a C₁₋₁₈ alkyl group, a C₁₋₁₈ alkenyl group, a C₁₋₈ alkyloxy group, a C₁₋₁₈ alkylcarbonyloxy group, or a hydroxyl group. The C₁₋₁₈ alkyl group is preferably a C₁₋₄ alkyl group such as a methyl group, an ethyl group, a propyl group, and an isobutyl group.

Y in the general formula (1) represents a divalent linking group. The divalent linking group is -O-, -(C=O)-, -O-(C=O)-, -(C=O)-O-, -OR₄-, -R₄-O-(C=O)-, -(C=O)-O-R₄-, -O-(C=O)-R₄-(C=O)-O-, or -(C=O)-O-R₄-O-(C=O)-, preferably -O-(C=O)- or -(C=O)-O-because it is relatively easy to synthesize. n1 is 0 or 1, preferably 1.

R₄ in -OR₄-, -R₄-O-(C=O)-, -(C=O)-O-R₄-, -O-(C=O)-R₄-(C=O)-O-, and -(C=O)-O-R₄-O-(C=O)- represents a C₁₋₁₂ alkylene group or a C₆₋₁₈ arylene group. Examples of the C₁₋₁₂ alkylene group include a methylene group, an ethylene group, a propylene group, a butylene group, a pentylene group, a hexylene group, an octylene group, a nonylene group, and a decanylene group. The alkylene group may be an alkylene group containing an alkyleneoxy unit as a repeating unit. Examples of the alkylene group containing an alkyleneoxy unit as a repeating unit include "-(CH₂CH₂O)n-CH₂CH₂-" and "-(CH(-CH₃)CH₂-O)ₘ-CH(-CH₃)CH₂-," n and m represent a natural number of 1 or more. Examples of the C₆₋₁₈ arylene group include a phenylene group and a methylphenylene group.

Z in the general formula (1) is a monovalent substituent or a linking group having a valence of 2 to 6. Namely, in the case where Z is a monovalent substituent, n2 is 1; and in the case where Z is a linking group having a valence of 2 to 6, n2 is 2 to 6.

The monovalent substituent represented by Z is an alkyl group, an alkyloxy group, or an aryl group. The monovalent alkyl group may be a straight-chain group without having a side chain or a branched-chain group having a side chain. The alkyl group preferably has a molecular weight of 15 to 600, and the alkyl group is more preferably a C₁₋₁₈ alkyl group, even more preferably a C₁₋₁₂ alkyl group.

The monovalent alkyloxy group may be a straight-chain group without having a side chain or a branched-chain group having a side chain. The alkyloxy group preferably has a molecular weight of 31 to 600, more preferably 500 or less, even more preferably 300 or less.

The alkyl group and an alkyl group contained in the alkyloxy group may be an alkyl group having a substituent such as a hydroxyl group or an alkoxy group; or an alkyl group or the like containing an alkyleneoxy unit as a repeating unit Namely, examples of the alkyl group containing an alkyleneoxy unit as a repeating unit include "CH₃-(OCH₂CH₂)n-" and "CH₃-(OCH(-CH₃)CH₂)m-." Examples of the alkyloxy group containing an alkyleneoxy unit as a repeating unit include "CH₃-(CH₂CH₂O)n-" and "CH₃-(CH(-CH₃)CH₂O)m-." n and m represent a natural number.

Examples of the monovalent aryl group include a phenyl group and a naphthyl group, and also include an alkyl group containing an aromatic ring such as a benzyl group.

The linking group having a valence of 2 to 6 represented by Z is an alkylene group, an alkyleneoxy group, or an arylene group. The alkylene group having a valence of 2 to 6 may be a straight-chain group without having a side chain or a branched-chain group having a side chain. The alkylene group preferably has a molecular weight of 14 to 600, and the alkylene group is more preferably a C₁₋₁₈ alkylene group, even more preferably a C₁₋₁₂ alkylene group.

The alkyleneoxy group having a valence of 2 to 6 may be a straight-chain group without having a side chain or a branched-chain group having a side chain. The alkyleneoxy group preferably has a molecular weight of 30 to 600, more preferably 500 or less, even more preferably 300 or less.

The alkylene group having a valence of 2 to 6 or an alkylene group contained in the alkyleneoxy group may be an alkylene group or the like containing an alkyleneoxy unit as a repeating unit Examples of the alkylene group containing an alkyleneoxy unit as a repeating unit include, as is the case with the aforementioned R₄, "-(CH₂CH₂O)n-CH₂CH₂-" and "-(CH(-CH₃)CH₂-O)m-CH(-CH₃)CH₂-." Examples of the alkyleneoxy group containing an alkyleneoxy unit as a repeating unit include "-(OCH₂CH₂)n-O-" and "-(OCH(-CH₃)CH₂₎m-O-." n and m represent a natural number.

In the general formula (1), n2 represents a natural number from 1 to 6; n2 is preferably 1 to 2 and n2 is more preferably 2. In general, photocuring sensitivity of an ink containing the maleimide compound may be enhanced as n2 is larger because the number of maleimide ring contained in one molecule is larger.

In the case where n2 is 3, examples of the alkylene group having a valence of 3 which is represented by Z include an alkylene group derived from a compound selected from the group consisting of glycerin, trimethylol alkyls and triazines. In the case where n2 is 4, examples of the alkylene group having a valence of 4 which is represented by Z include an alkylene group derived from pentaerythritol. In the case where n2 is 6, examples of the alkylene group having a valence of 6 which is represented by Z include an alkylene group derived from bistrimethylol alkyls.

Examples of the arylene group having a valence of 2 to 6 include a phenylene group and a naphthylene group, and also include an alkylene group containing an aromatic ring such as "-(CH₂)-C₆H₄-(CH₂)-."

It is preferable that the maleimide compound represented by the general formula (1) is a compound represented by the following general formulae (2) to (4). X, Z, and n2 in the following formulae are the same as aforementioned, and n2 is preferably 1 to 2.

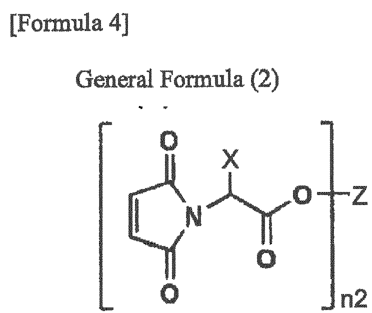

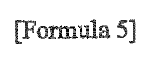

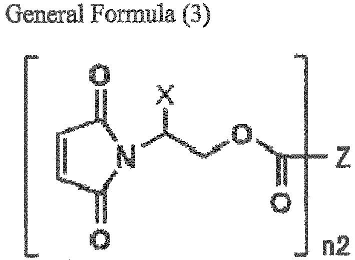

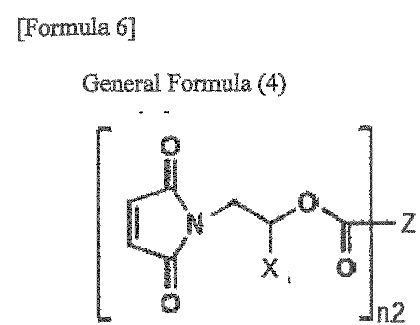

Specific examples of the maleimide compound represented by the general formula (1) include compounds shown below. The compounds are shown by broadly classified into the compounds in which n2 in the general formula (1) is 1, the compounds in which n2 in the general formula (1) is 2, and the compounds in which n2 in the general formula (1) is 3.

First, specific examples of the maleimide compounds in which n2 in the general formula (1) is 1 are shown below.

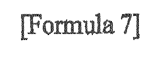

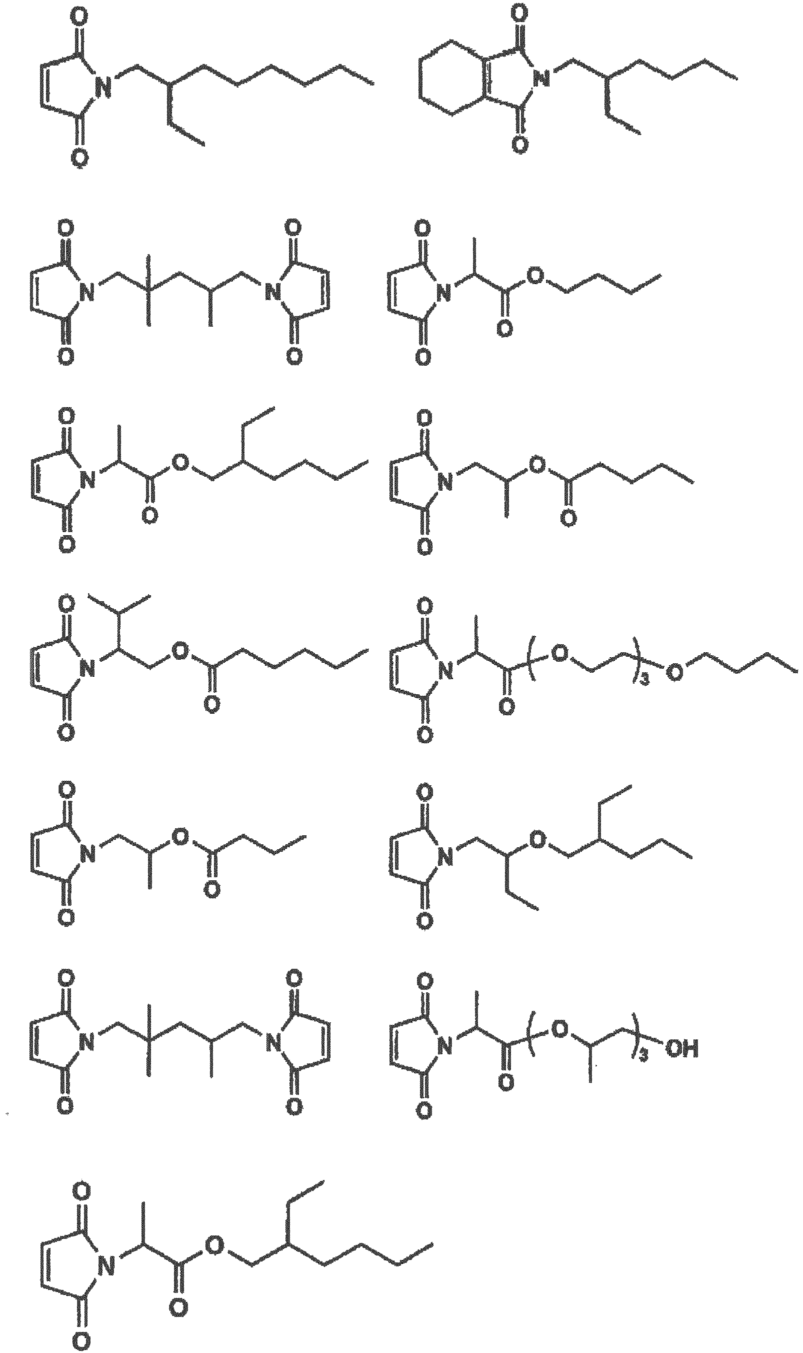

Specific examples of the maleimide compound in which n2 in the general formula (1) is 2 are shown below.

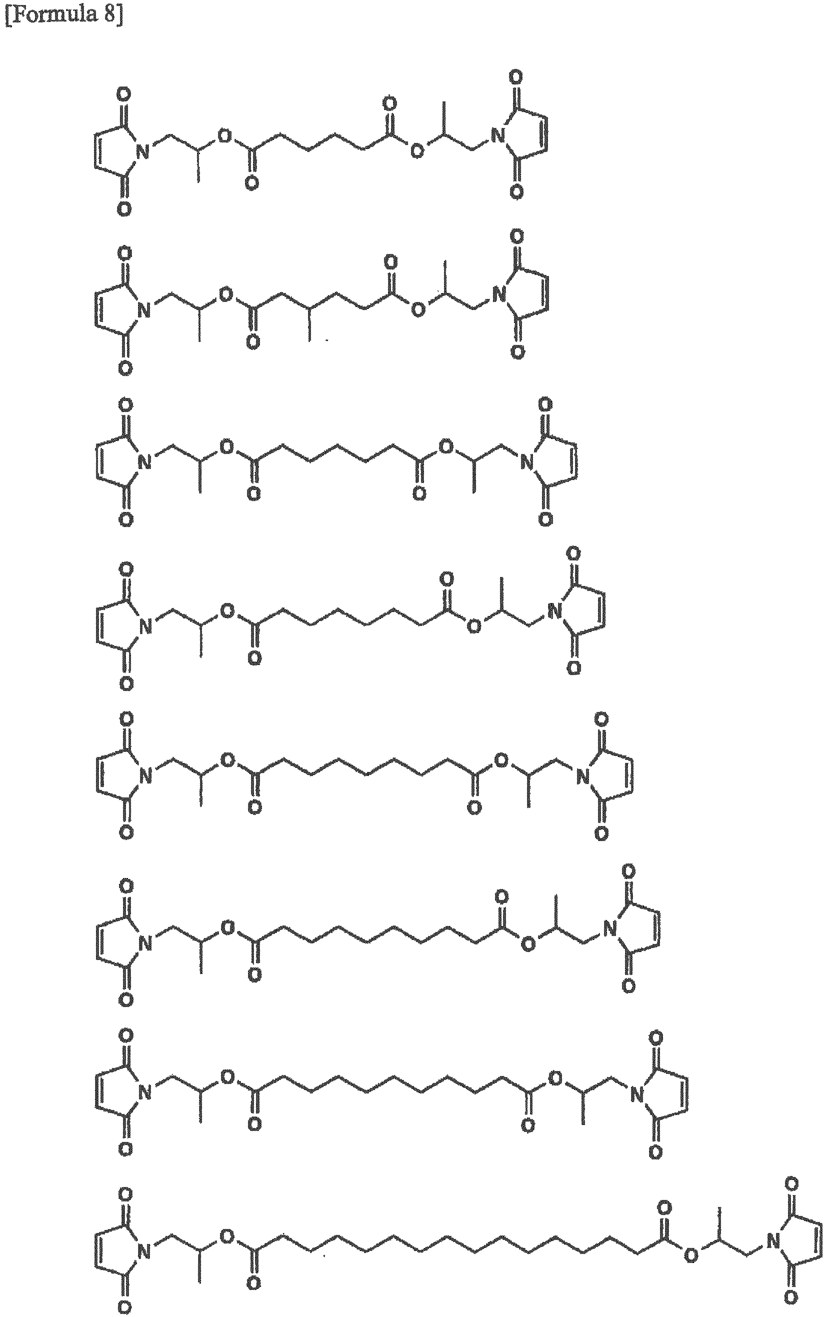

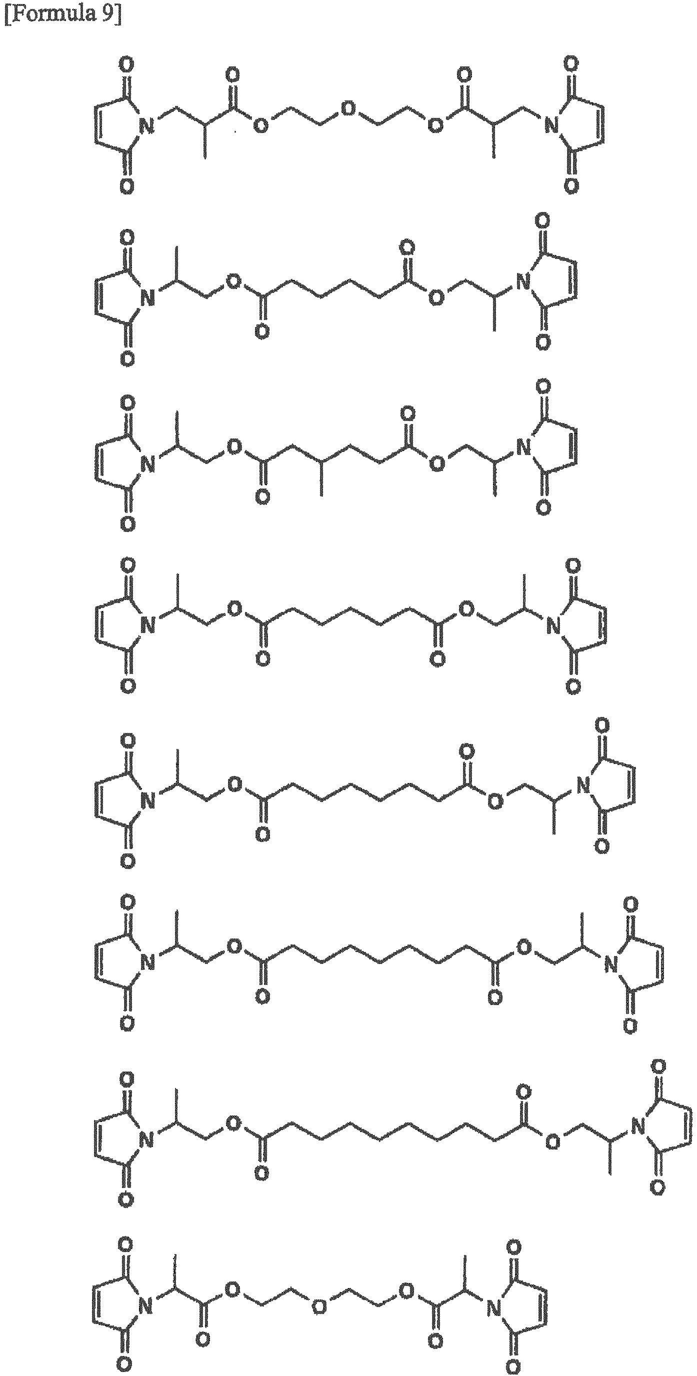

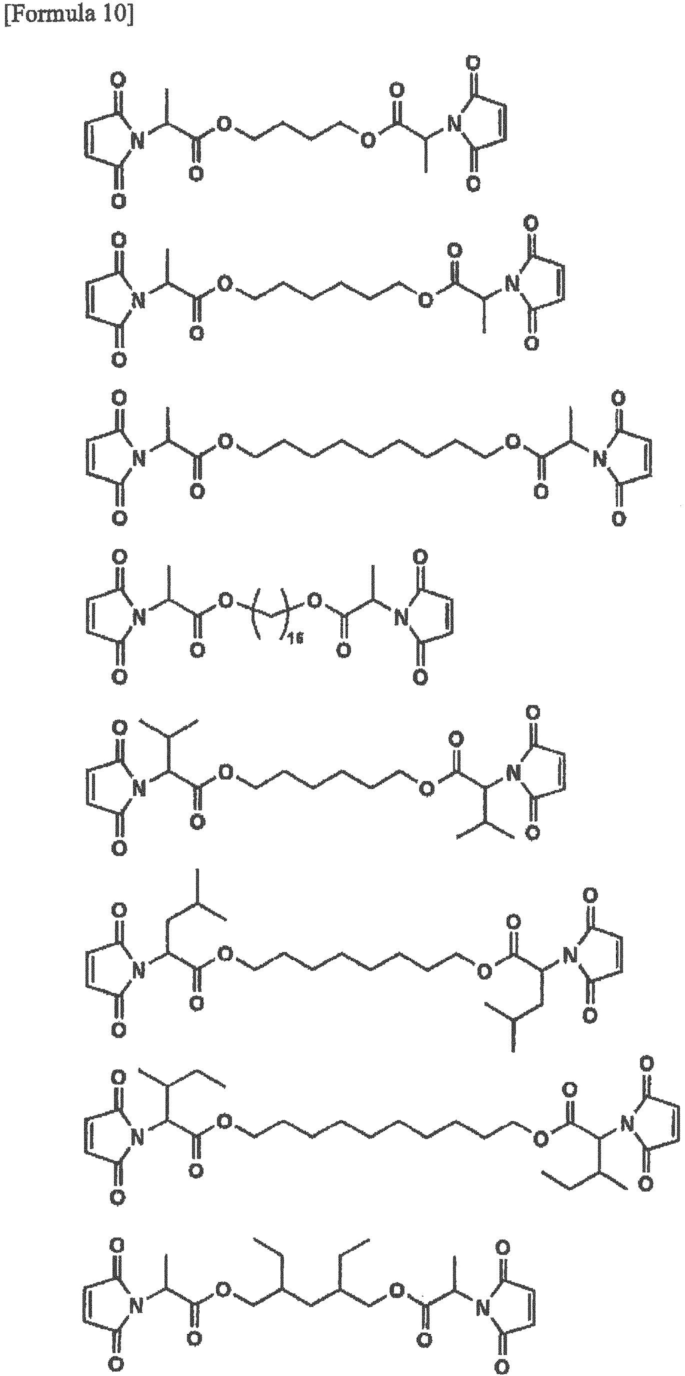

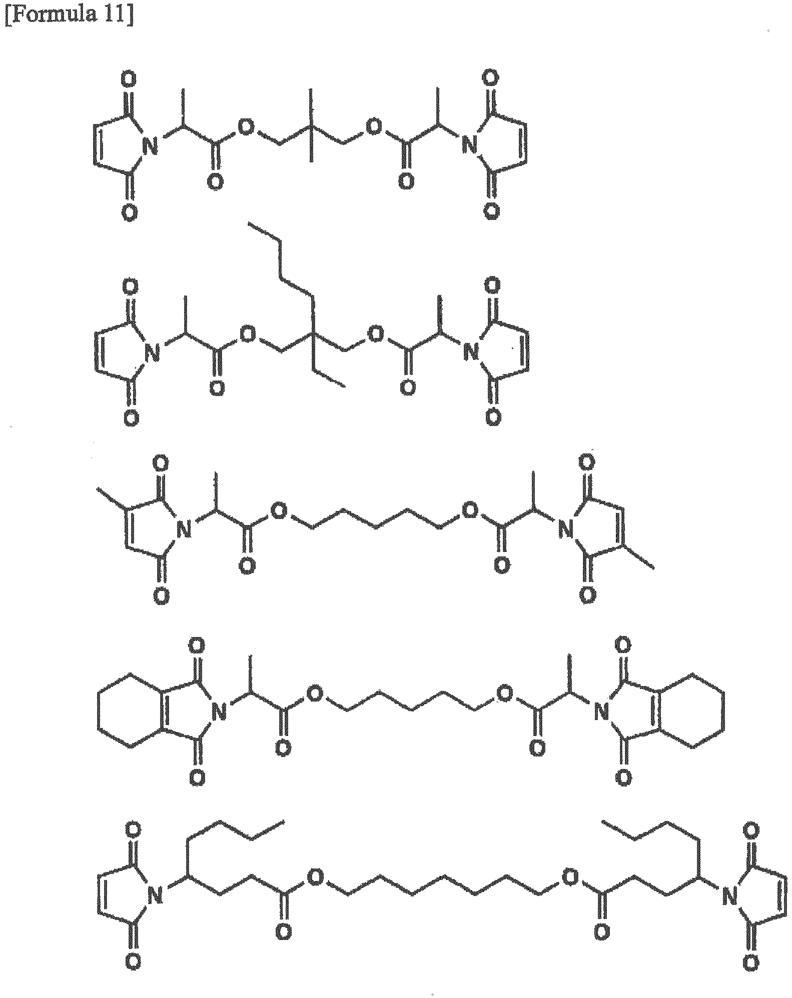

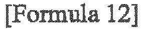

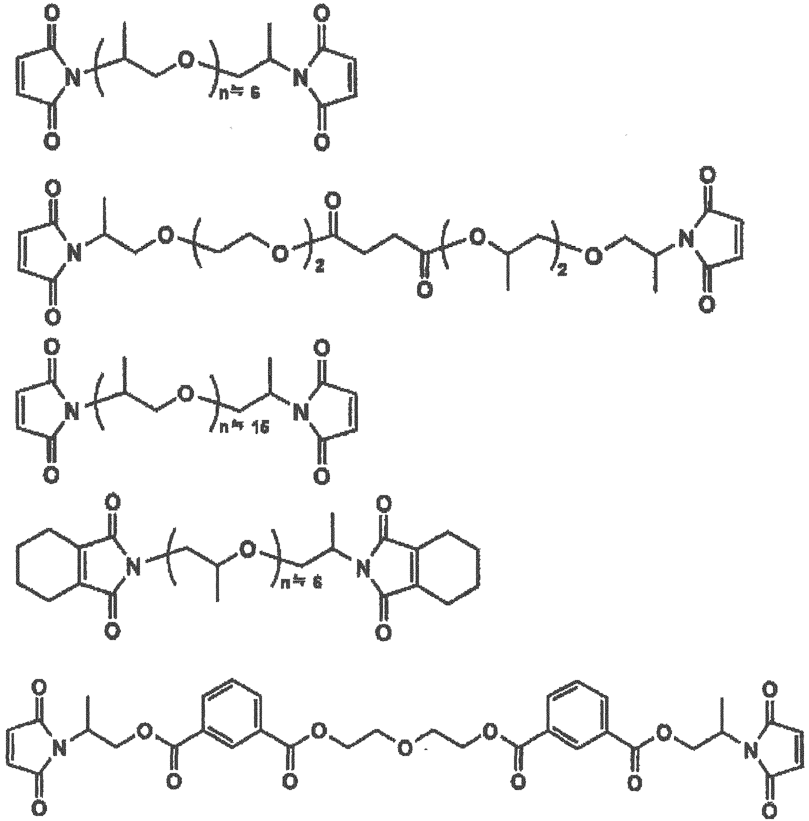

A specific example of the maleimide compound in which n2 in the general formula (1) is 3 is shown below.

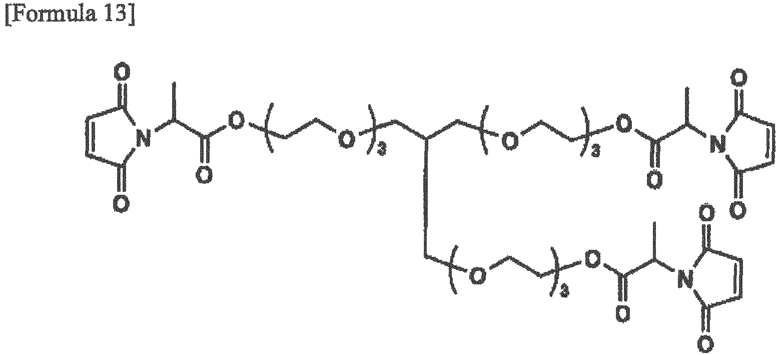

It is preferable that the maleimide compound represented by the general formula
(1) has a molecular weight in the range of 200 to 1,000, more preferably in the range of 200 to 800. In the case where the molecular weight is less than 200, the maleimide compound is easy to be crystallized, and when an ink containing the maleimide compound is ejected, clogging sometimes occurs. On the other hand, in the case where the molecular weight exceeds 1,000, the viscosity of the ink becomes high and the ejection stability sometimes deteriorates.

It is preferable that the maleimide compound has a molecular weight of 420 or more from the standpoint of suppressing solving out of the maleimide compound. Particularly in the case where food packaging materials are printed with the ink of the present invention, it is required to suppress solving out of the maleimide compound from the printed matters and mixing into foods.

### Method for Producing Maleimide Compound

A method for producing the maleimide compound represented by the general formula (1) is not particularly limited and may be a publicly known method. The maleimide compound can be produced by, for example, i) a method of reacting a monovalent or multivalent amine with maleic anhydride; ii) a method of reacting a maleimide compound that has a substituent having a hydroxyl group at N position with a monovalent or multivalent carboxylic acid; and iii) a method of reacting a maleimide compound that has a substituent having a carboxyl group at N position with a monovalent or multivalent alcohol.

### Second Maleimide Compound or Derivative of Butenedioic Acid

The photocurable inkjet ink of the present invention includes at least one of a second maleimide compound and a derivative of butenedioic acid in addition to the first maleimide compound. The second maleimide compound may be a maleimide compound having a structure different from that of the first maleimide compound.

Examples of the second maleimide compounds include the maleimide compound represented by the aforementioned general formula (1) and, in addition, include a monovalent or multivalent maleimide compound in which an aryl is bonded at N position of the maleimide, and a monovalent or multivalent maleimide compound in which a cycloalkyl is bonded at N position of the maleimide. Examples of the second maleimide compound other than the maleimide compound represented by the general formula (1) include a monomaleimide such as N-cyclohexylmaleimide and N-phenylmaleimide; and a bismaleimide such as 1,6-bismaleimide-(2,2,4-trimethyl)hexane, bisphenol A diphenylether bismaleimide, 3,3'-dimethyl-5,5'-diethyl-4,4'-diphenylmethane bismaleimide, 4,4'-diphenylmethane bismaleimide, and m-phenylene bismaleimide.

It is preferable that the structure of the second maleimide compound is similar to the structure of the first maleimide compound. Therefore, it is more preferable that the second maleimide compound is a compound represented by the aforementioned general formula (1).

Specific examples of an aspect in which the structure of the first maleimide compound and the structure of the second maleimide compound are similar include an aspect in which both of the first maleimide compound and the second maleimide compound are a compound represented by the general formula (1) and the numbers of carbon atoms of an alkylene group in Z are different; the numbers of the maleimide rings (n2) are different; there is a difference in that the divalent linking group represented by Y exists or not, or the kinds of divalent linking group represented by Y are different; and each R₃ has an asymmetric carbon atom and the kinds of substituents of the side chains are different.

Examples of the derivative of butenedioic acid include maleic acid esters, fumaric acid esters, and maleic anhydride. Preferable specific examples of maleic acid esters include maleic acid diesters such as diethyl maleate, dibutyl maleate, diisopropyl maleate, and di-2-ethylhexyl maleate. Preferable specific examples of fumaric acid esters include fumaric acid diesters such as diethyl fumarate, dibutyl fumarate, and di-2-ethylhexyl fumarate.

The second maleimide compound may by a mixture of two or more of the second maleimide compounds. Similarly, the derivative of butenedioic acid may be a mixture of two or more of the derivatives of butenedioic acid.

As described previously, since the maleimide compounds in general have a high crystallinity, the maleimide compounds are easy to be crystallized and precipitated at a low temperature. The ink of the present invention on the other hand further includes, in addition to the first maleimide compound as a main component, the second maleimide compound having a structure different from that of the first maleimide compound or the derivative of butenedioic acid. Thereby, it is thought that the crystallinity of the first maleimide compound is lowered and the maleimide compound becomes hard to be precipitated at a low temperature.

It is preferable that a content ratio of the first maleimide compound to the second maleimide compound or the derivative of butenedioic acid (also referred to as "the second maleimide compound etc.") in the ink satisfies the following condition. Namely, when a melting point of the first maleimide compound is defined as Tm1 (°C), and a melting point of a mixture obtained by mixing the first maleimide compound and the second maleimide compound etc. in such a way that the content ratio of the first maleimide compound to the second maleimide compound etc. in the mixture is the same as that in the ink is defined as Tm2 (°C), it is preferable that the content ratio in the ink is set so that Tm1 > Tm2.

Furthermore, in order to sufficiently suppress the precipitation at a low temperature, it is preferable that the content ratio of the first maleimide compound to the second maleimide compound etc. in the ink is set in such a way that a difference of the melting points ΔTm (Tm1 - Tm2) is 40°C or more, more preferably 60°C or more. The melting point of the mixture can be adjusted by selecting the first maleimide compound and the second maleimide compound etc. or adjusting the content ratio thereof.

The melting point Tm of the maleimide compound can be measured according to JIS K0064 by using a DSC 6000 manufactured by Seiko Instruments Inc.

It is preferable that the total content of the second maleimide compound and the derivative of butenedioic acid is 5 to 30 mol% based on the content of the first maleimide compound, more preferably 10 to 20 mol%. When the total content of the second maleimide compound and the derivative of butenedioic acid is less than 5 mol%, the precipitation suppressing effect on the maleimide compound sometimes cannot be sufficiently obtained, and when the total content of the second maleimide compound and the derivative of butenedioic acid is more than 30 mol%, features of the first maleimide compound sometimes cannot be fully exhibited.

As described previously, the photocurable inkjet ink of the present invention includes a first maleimide compound represented by the general formula (1) and at least one of a second maleimide compound having a structure different from that of the first maleimide compound and a derivative of butenedioic acid. In the photocurable inkjet ink of the present invention, the first and the second maleimide compounds can be used as a photopolymerizable monomer. Furthermore, it is preferable that the photocurable inkjet ink of the present invention further includes another polymerizable compound along with the first and the second maleimide compounds.

Examples of another polymerizable compound include a compound having an ethylenic double bond such as vinyl ether compounds, (meth)acryloyl compounds, and N-vinyl compounds; preferably vinyl ether compounds and N-vinyl compounds. Since vinyl ether compounds and N-vinyl compounds are electron rich donor monomers, a charge transfer complex polymerization (CT polymerization) can be carried out by combining with a maleimide compound.

When the photocurable inkjet ink of the present invention contains at least one of a vinyl ether compound and an N-vinyl compound as a monomer along with a maleimide compound, it is preferable that an equivalent ratio of the maleimide group in the maleimide compound to the total vinyl group of the vinyl ether compound and the N-vinyl compound (maleimide group/vinyl group) is in the range of 20/80 to 70/30, more preferably 50/50 to 70/30. The reason is to allow a charge transfer complex between the maleimide compound and the vinyl ether compound or the N-vinyl compound to be easily formed and to enhance the photopolymerizability Moreover, by setting the equivalent ratio to the above ratio, it is easy to adjust the viscosity of the photocurable inkjet ink in the suitable range.

It is preferable that the total amount of the first maleimide compound, the second maleimide compound, and the derivative of butenedioic acid contained in the ink of the present invention is 35 wt% to 65 wt% based on the total amount of the photocurable inkjet ink.

### Vinyl Ether Compound

A vinyl ether compound that can be contained in the photocurable inkjet ink of the present invention can be a monofunctional vinyl ether compound or a multifunctional vinyl ether compound which is bifunctional or higher functional.

Examples of the monofunctional vinyl ether compound include butyl vinyl ether, hexyl vinyl ether, ethyl hexyl vinyl ether, phenyl vinyl ether, benzyl vinyl ether, ethyl ethoxy vinyl ether, acetyl ethoxy ethoxy vinyl ether, cyclohexyl vinyl ether, and adamantyl vinyl ether.

Examples of the bifunctional vinyl ether compound include ethylene glycol divinyl ether, diethylene glycol divinyl ether, triethylene glycol divinyl ether, propylene glycol divinyl ether, dipropylene glycol vinyl ether, butylene divinyl ether, dibutylene glycol divinyl ether, neopentyl glycol divinyl ether, cyclohexanediol divinyl ether, cyclohexanedimethanol divinyl ether, norbornyldimethanol divinyl ether, isovinyl divinyl ether, divinyl resorcin, and divinylhydroquinone.

Examples of the trifunctional vinyl ether compound include glycerin trivinyl ether, glycerin ethylene oxide adduct trivinyl ether (an addition molar number of ethylene oxide is 6), trimethylolpropane trivinyl ether, and trivinyl ether ethylene oxide adduct trivinyl ether (an addition molar number of ethylene oxide is 3).

Examples of the tetrafunctional or higher functional vinyl ether compound include pentaerythritol trivinyl ether, ditrimethylolpropane hexavinyl ether, and ethylene oxide adducts thereof.

Among vinyl ether compounds described above, more preferable vinyl ether compounds are bifunctional or higher functional vinyl ether compounds. It is more preferable to use the bifunctional or higher functional vinyl compound in terms of the photocuring sensitivity.

Moreover, examples of the vinyl ether compound having an alicyclic skeleton include, in the case of monofunctional compound, cyclohexyl vinyl ether and adamantyl vinyl ether. Examples in the case of bifunctional compound include cyclohexanediol divinyl ether, cyclohexanedimethanol divinyl ether, norbornyldimethanol divinyl ether, and isovinyl divinyl ether.

### N-Vinyl Compound

Examples of the N-vinyl compound that can be contained in the photocurable inkjet ink of the present invention include N-vinyl formamide, N-vinyl acetamide, N-vinyl pyrrolidone, and N-vinyl caprolactam.

### (Meth)acryloyl Compound

The (meth)acryloyl compound that can be contained in the photocurable inkjet ink of the present invention may be monofunctional or multifunctional.

Examples of the monofunctional (meth)acryloyl compound include isoamyl acrylate, stearyl acrylate, lauryl acrylate, decyl acrylate, isomyristyl acrylate, isostearyl acrylate, 2-ethylhexyl acrylate, 2-hydroxybutyl acrylate, butoxyethyl acrylate, ethoxy diethylene glycol acrylate, methoxy diethylene glycol acrylate, methoxy propylene glycol acrylate, phenoxyethyl acrylate, tetrahydrofurfuryl acrylate, isobornyl acrylate, 2-hydroxyethyl acrylate, 2-hydroxypropyl acrylate, 2-hydroxy-3-phenoxypropyl acrylate, and t-butylcyclohexyl acrylate.

Examples of the bifunctional (meth)acryloyl compound include triethylene glycol diacrylate, tetraethylene glycol diacrylate, tripropylene glycol diacrylate, 1,4-butanediol diacrylate, 1,6-hexanediol diacrylate, 1,9-nonanediol diacrylate, and neopentyl glycol diacrylate, and a bifunctional monomer such as urethane acrylate and polyester acrylate.

Examples of the trifunctional or higher functional (meth)acryloyl compound include trimethylolpropane triacrylate, pentaerythritol triacrylate, pentaerythritol tetraacrylate, and dipentaerythritol hexaacrylate.

Besides, examples of another polymerizable compound that can be contained in the photocurable inkjet ink of the present invention include maleic acid, fumaric acid, and fumaric acid esters.

The photocurable inkjet ink of the present invention may contain a photoinitiator. Since the maleimide compound can also act as a photoinitiator, the maleimide compound may be used as a photoinitiator. Alternatively, the photocurable inkjet ink may contain another photoinitiator along with the maleimide compound to enhance the photocuring sensitivity. Other photoinitiators are added to the photocurable inkjet ink as a dissolved material or a dispersed material as necessary.

Examples of the photoinitiator are not particularly limited, but can be classified as follows.

1) Benzophenones such as benzophenone, hydroxybenzophenone, bis-N,N-dimethylaminobenzophenone, bis-N,N-diethylaminobenzophenone, and 4-methoxy-4'-dimethylaminobenzophenone, and salts thereof;
2) Thioxanthones such as thioxanthone, 2,4-diethylthioxanthone, isopropylthioxanthone, chlorothioxanthone, and isopropoxychlorothioxanthone, and salts thereof;
3) Anthraquinones such as ethylanthraquinone, benzanthraquinone, aminoanthraquinone, and chloroanthraquinone;
4) Acetophenones;
5) Benzoin ethers such as benzoin methyl ether;
6) 2,4,6-trihalomethyl triazines;
7) Imidazoles such as 1-hydroxycyclohexylphenyl ketone, 2-(o-chlorophenyl)-4,5-diphenylimidazole dimers, 2-(o-chlorophenyl)-4,5-di(m-methoxyphenyl)imidazole dimers, 2-(o-fluorophenyl)-4,5-phenylimidazole dimers, 2-(o-methoxyphenyl)-4,5-phenylimidazole dimers, 2-(p-methoxyphenyl)-4,5-diphenylimidazole dimers, 2,4-di(p-methoxyphenyl)-5-phenylimidazole dimers, 2-(2,4-dimethoxyphenyl)-4,5-diphenylimidazole dimers, and 2,4,5-triarylimidazole dimers;
8) Benzoins such as benzyldimethylketal, 2-benzyl-2-dimethylamino-1-(4-morpholinophenyl)butane-1-one, 2-methyl-1-[4-(methylthio)phenyl]-2-morpholino-1-propanone, 2-hydroxy-2-methyl-1-phenyl-propane-1-one, 1-[4-(2-hydroxyethoxy)-phenyl]-2-hydroxy-2-methyl-1-propane-1-one, phenanthrenequinone, 9,10-phenanthrenequinone, methylbenzoin, and ethylbenzoin;
9) Acridine derivatives such as 9-phenyl acridine and 1,7-bi(9,9'-acridinyl)heptane;
10) Bisacylphosphine oxide, bisphenylphosphine oxide, and bis(2,4,6-trimethylbenzoyl)-phenylphosphine oxide; and
11) 4-(2-hydroxyethoxy)phenyl-(2-hydroxy-2-propyl)ketone and ethylene oxide adducts thereof.

A sensitizer can be contained in the photocurable inkjet ink of the present invention in order to shift an absorption wavelength by the composition to a long wavelength side. Examples of the photosensitizer include benzophenones, thioxanthones, styryl ketones, coumarins, rhodamines, cyanines, and merocyanines. Moreover, a dihydrobenzothiaine-4-one sensitizer described in Japanese Patent Application Laid-Open No. 2010-018728 etc. maybe contained.

It is preferable that the amount of the photosensitizer to be added in the case where the photosensitizer is added is in the range of 0.1 times to 2 times by mass of the amount of the photoinitiator to be added.

Moreover, the photocurable inkjet ink of the present invention may further include ethyl p-dimethylaminobenzoate, p-dimethylaminobenzoic acid amyl, triethanolamine, and so on for the purpose of enhancing surface curability.

The photocurable inkjet ink of the present invention may further include a colorant.

The colorant may be either a dye or a pigment, but may preferably be a pigment that is difficult to be deteriorated by light in consideration of the photocuring properties. Examples of the pigment to be used include carbon black, colorless inorganic pigments such as titanium oxide and calcium carbonate, or colored organic pigments.

Examples of the organic pigment include insoluble azo pigments such as Toluidine Red, Toluidine Maroon, Hanza Yellow, Benzidine Yellow, and Pyrazolone Red; soluble azo pigments such as Lithol Red, Helio Bordeaux, Pigment Scarlet, and Permanent Red 2B; derivatives from vat dyes such as alizarin, indanthrone, and Thioindigo Maroon; phthalocyanine-based organic pigments such as Phthalocyanine Blue and Phthalocyanine Green; quinacridone-based organic pigments such as Quinacridone Red and Quinacridone Magenta; perylene-based organic pigments such as Perylene Red and Perylene Scarlet; isoindolinone-based organic pigments such as Isoindolinone Yellow and Isoindolinone Orange; pyranthrone-based organic pigments such as Pyranthrone Red and Pyranthrone Orange; thioindigo-based organic pigments; condensed azo-based organic pigments; benzimidazolone-based organic pigments; quinophthalone-based organic pigments such as Quinophthalone Yellow; isoindoline-based organic pigments such as Isoindoline Yellow; and as other pigments, Flavanthrone Yellow, Acylamide Yellow, Nickel Azo Yellow, Copper Azomethine Yellow, Perynone Orange, Anthrone Orange, Dianthraquinonyl Red, and Dioxazine Violet.

Examples of the organic pigment are shown by Color Index (C.I.) No. below.

C.I. Pigment Yellow 12, 13, 14, 17, 20, 24, 74, 83, 86, 93, 109, 110, 117, 120, 125, 128, 129, 137, 138, 139, 147, 148, 150, 151, 153, 154, 155, 166, 168, 180, 185;
C.I. Pigment Orange 16, 36, 43, 51, 55, 59, 61;
C.I. Pigment Red 9, 48, 49, 52, 53, 57, 97, 122, 123, 149, 168, 177, 180, 192, 202, 206, 215, 216, 217, 220, 223, 224, 226, 227, 228, 238, 240;
C.I. Pigment Violet 19, 23, 29, 30, 37, 40, 50;
C.I. Pigment Blue 15, 15:1, 15:3, 15:4, 15:6, 22, 60, 64;
C.I. Pigment Green 7, 36; and
C.I. Pigment Brown 23, 25, 26:

Among the above pigments, quinacridone-based, phthalocyanine-based, benzimidazolone-based, isoindolinone-based, condensed azo-based, quinophthalone-based, isoindoline-based organic pigments, and so on are preferable because those pigments are excellent in lightfastness.

It is preferable that the organic pigment in the photocurable inkjet ink is a fine particle having an average particle size of 15 to 250 nm. The average particle size of the organic pigment is measured by a laser scattering method. The pigment having an average particle size of less than 15 nm sometimes brings about the deterioration of the lightfastness because the particle size is small. The pigment having an average particle size of more than 250 nm becomes a cause of clogging of inkjet head because a large amount of coarse particles are contained and sometimes brings about such problems as the occurrence of fine mists called satellites, or the deterioration in ejection stability. However, the average particle size of titanium oxide pigment is made to be 150 to 300 nm, preferably 180 to 250 nm for the purpose of giving whiteness and hiding performance.

Moreover, the maximum particle size of the pigment in the photocurable inkjet ink is set so as not to exceed 1 µm. Therefore, it is preferable that the pigment is dispersed sufficiently or coarse particles are removed by filtration. When the coarse particles exist, the ejection stability is deteriorated as described previously. The micronization of organic pigments can be carried out by using a publicly known dispersion method.

Furthermore, it is preferable that a surface treatment is carried out for the pigment by a publicly known technique such as an acidic treatment, a basic treatment, or a surface treatment by a synergist, various coupling agents, or the like. Thereby, the adsorption of a pigment dispersant on the pigment is enhanced, and the dispersion stability can be ensured.

It is preferable that the content of the pigment except a white pigment in the photocurable inkjet ink is in the range of 1.5 to 8 wt% for the purpose of obtaining a sufficient image density and a sufficient lightfastness, and it is preferable that the content of titanium oxide as a white pigment is in the range of 10 to 30 wt%.

The photocurable inkjet ink may include a pigment dispersant to disperse the pigment. Examples of the pigment dispersant include hydroxyl group-containing carboxylic acid esters, salts of long-chain polyaminoamides and high molecular weight acid esters, salts of high molecular weight polycarboxylic acids, salts of long-chain polyaminoamides and polar acid esters, high molecular weight unsaturated acid esters, copolymers, modified polyurethanes, modified polyacrylates, polyether ester-type anionic active agents, naphthalenesulfonic acids formalin condensate salts, aromatic sulfonic acid formalin condensate salts, polyoxyethylene alkyl phosphoric acid esters, polyoxyethylene nonylphenyl ethers, stearyl amine acetates, and pigment derivatives.

Specific examples of the pigment dispersants include "Anti-Terra-U (polyaminoamide phosphoric acid salt)," "Anti-Terra-203/204 (high molecular weight polycarboxylic acid salt)," "Disperbyk-101 (polyaminoamide phosphoric acid salt and acid ester), 107 (hydroxyl group-containing carboxylic acid ester), 110 (acid group-containing copolymer), 130 (polyamide), 161, 162, 163, 164, 165, 166, and 170 (copolymer)," "400," "Bykumen (high molecular weight unsaturated acid ester)," "BYK-P104, P105 (high molecular weight unsaturated acid polycarboxylic acid)," "P104S, 240S (high molecular weight unsaturated acid polycarboxylic acid and silicone)," and "Lactimon (long-chain amine, an unsaturated acid polycarboxylic acid, and silicone)" produced by BYK-Chemie GmbH.

Moreover, specific examples of pigment dispersants include "Efka 44, 46, 47, 48, 49, 54, 63, 64, 65, 66, 71, 701, 764, and 766" and "Efka Polymer 100 (modified polyacrylate), 150 (an aliphatic modified polymer), 400, 401, 402, 403, 450, 451, 452, 453 (modified polyacrylate), and 745 (copper phthalocyanine)" produced by Efka Chemicals B.V; "Flowlen TG-710 (a urethane oligomer)," "Flownon SH-290 and SP-1000," and "Polyflow No. 50E and No. 300 ((meth)acrylic copolymer)" produced by Kyoeisha Chemical Co., Ltd.; and "Disparlon KS-860, 873SN, and 874 (polymer dispersant), #2150 (aliphatic polycarboxylic acid), and #7004 (polyether ester-type)" produced by Kusumoto Chemicals, Ltd.

Furthermore, specific examples of pigment dispersants include "Demol RN, N (naphthalenesulfonic acid formalin condensate sodium salt), MS, C, SN-B (aromatic sulfonic acid formalin condensate sodium salt), and EP," "Homogenol L-18 (polycarboxylic acid-type polymer)," "Emulgen 920, 930, 931, 935, 950, and 985 (polyoxyethylene nonyl phenyl ether)," and "Acetamin 24 (coconut amine acetate) and 86 (stearylamine acetate)" produced by Kao Coup.; "Solsperse 5000 (phthalocyanine ammonium salt), 13240, 13940 (polyester amine), 17000 (fatty acid amine), 24000, 32000, and 7000" produced by Zeneca PLC; "Nikkol T106 (polyoxyethylene sorbitan monooleate)," "MYS-IEX (polyoxyethylene monostearate)," and "Hexagline 4-0 (hexaglyceryl tetraoleate)" produced by Nikko Chemicals Co., Ltd.; "AJISPER 821, 822, and 824" produced by Ajinomoto Fine-Techno Co., Inc.; and "Solsperse 24000GR" produced by The Lubrizol Corporation.

It is preferable that the content of these pigment dispersants in the photocurable inkjet ink is in the range of 5 to 70 parts by weight based on 100 parts by weight of the pigment, more preferably 10 to 50 parts by weight. When the content of the pigment dispersant is less than 5 parts by weight, the dispersion stability cannot be obtained; when the content of the pigment dispersant is more than 70 parts by weight, the ejection stability of the inkjet ink is sometimes deteriorated.

Furthermore, it is preferable that these pigment dispersants have a solubility of 5 wt% or more at 0°C in the photocurable inkjet ink. In the case where the solubility of the pigment dispersant is less than 5 wt%, when the photocurable composition is stored at a low temperature, polymer gels or soft aggregates of the pigment are generated, therefore the storage stability of the photocurable inkjet ink is deteriorated; and the ejection stability of the inkjet ink is deteriorated.

A radical polymerization inhibitor may be added to the photocurable inkjet ink of the present invention for the purpose of obtaining storage stability.

Examples of the radical polymerization inhibitor include methoquinone (hydroquinone monomethyl ether), hydroquinone, 4-methoxy-1-naphthol, hindered amine-based antioxidants, nitrogen-containing heterocyclic mercapto-based compounds, thioether-based antioxidants, hindered phenol-based antioxidants, ascorbic acid compounds, zinc sulfate, thiocyanic acid salts, thiourea derivatives, various sugars, phosphoric acid-based antioxidants, nitrous acid salts, sulfurous acid salts, thiosulfuric acid salts, hydroxylamine derivatives, nitrosyl radicals, and polycondensates of dicyandiamides and polyalkylenepolyamines. Nitrosyl radicals are particularly preferable.

It is preferable that the amount of the radical polymerization inhibitor to be added to the photocurable inkjet ink is 10 to 5,000 ppm. When the amount of the radical polymerization inhibitor to be added is less than 10 ppm, the storage stability cannot be obtained, the viscosity of the photocurable inkjet ink becomes high, or repelling property for liquid is deteriorated. Therefore, the ejection stability as an inkjet ink is deteriorated. On the other hand, when the amount to be added is more than 5,000 ppm, the photocuring sensitivity of the photocurable inkjet ink is deteriorated.

The photocurable inkjet ink of the present invention may contain various additives such as a surfactant, a lubricant, a filler, a rust prevention agent, a defoaming agent, a thickening agent, a gelling agent, and a polymer as necessary.

Moreover, a small amount of solvent such as ester-based solvents, ether-based solvents, ether ester-based solvents, ketone-based solvents, aromatic hydrocarbon-based solvents, and nitrogen-containing organic solvents may be added as necessary. However, since the photocurable inkjet ink of the present invention has a low viscosity without containing excessive amount of solvent; the content of the solvent in the photocurable inkjet ink may be made to be 10 wt% or less, may be 5 wt% or less, or the solvent may not essentially be contained.

The photocurable inkjet ink of the present invention can be cured by light irradiation. The light irradiation may be carried out by using an irradiation apparatus such as ultraviolet LEDs, ultraviolet lasers, mercury arc lamps, xenon arc lamps, low pressure mercury lamps, fluorescent lamps, carbon arc lamps, and tungsten-halogen lamps, or may be carried out by using sun light. The photocurable inkjet ink of the present invention may preferably be cured by irradiating ultraviolet light.

Since the photocurable inkjet ink of the present invention is ejected from inkjet head nozzles having a diameter of a micron order, it is preferable that the photocurable inkjet ink of the present invention has a viscosity of 5 to 100 mPa·s at 25°C, has share rate dependency as low as possible, has a surface tension in the range of 22 to 35 mN/m at 25°C, and does not contain gelled substances exceeding 1 µm in size except pigments.

Moreover, it is preferable that the inkjet ink is made to have a conductivity of 10 µS/cm or less so that electric corrosion does not occur within the inkjet head. Furthermore, in the case where the inkjet ink is applied to a continuous type inkjet apparatus, it is preferable that the conductivity is adjusted to be 0.5 mS/cm or more. In this case, the conductivity is adjusted by adding an electrolyte to the inkjet ink.

The ink applied to a substrate by an inkjet method is cured by irradiation of light. The substrate is a wide variety of synthetic resins and the like that have been used so far for various end use applications and is not particularly limited. Specific examples of the substrate include polyesters, polyvinyl chlorides, polyethylenes, polyurethanes, polypropylenes, (meth)acrylic resins, polycarbonates, polystyrenes, acrylonitrile-butadiene-styrene copolymers, polyethylene terephthalates, and polybutadiene terephthalates. The thicknesses and shapes of these synthetic resin substrates are not limited at all. Furthermore, the substrate may also be metals, glasses, printing sheets, and so on.

Light irradiation to the ink applied on the substrate may be carried out by using a light irradiation apparatus installed in an inkjet printer. Irradiation light is preferably ultraviolet light.

A recording method by an inkjet method may either be a multipass system serial recording method in which inkjet inks are overlap-printed and cured or a line recording method in which inkjet inks are recorded in one pass. For instance, the recording method may include steps of ejecting an inkjet ink onto a substrate, irradiating the inkjet ink on the substrate with ultraviolet light to be cured or half-cured; and further ejecting the inkjet ink thereon and curing the inkjet ink by irradiating active energy ray.

### Examples

Hereinafter, the present invention will be described in more detail with reference to Examples. The scope of the present invention is not construed as limited by these Examples.

### (Synthesis Example 1)

### Synthesis of Maleimide Compound 1-1

### [Formula 14]

### Structure of Maleimide Compound 1-1

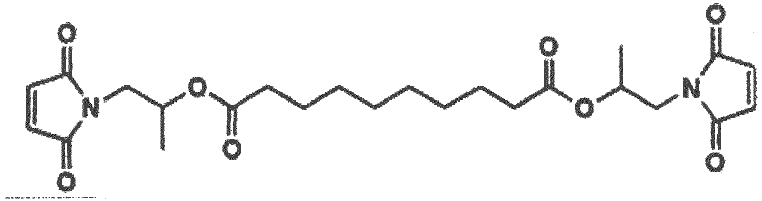

N-β-hydroxypropyl maleimide was synthesized using a method described in the literature "Journal of Synthetic Organic Chemistry, Japan, 23(2), (1965). A 300 ml recovery flask equipped with a stirrer, a decompression apparatus, and a trap is then charged with 5.0 g of the N-β-hydroxypropyl maleimide, 3.03 g of sebacic acid, 0.7 g of p-toluenesulfonic acid monohydrate, 0.05 g of 2,6-tert-butyl-p-cresol, and 20 ml of toluene in this order. And the resultant mixture was reacted with stirring at a reaction temperature of 80°C for 12 hours while azeotropically distilling off the produced water and toluene under reduced pressure. A solution obtained after the completion of the reaction was cooled to room temperature, dissolved in 300 ml of ethyl acetate, washed 3 times in 100 ml of a saturated aqueous solution of sodium hydrogencarbonate, and washed once in 100 ml of a saturated saline solution. The obtained organic layer was dried over magnesium sulfate and then condensed to obtain 3.3 g of maleimide compound 1-1. Maleimide compound 1-1 was solid at room temperature.

The chemical structure of the obtained maleimide compound 1-1 was confirmed by an NMR measurement.
¹H NMR (400 MHz, CDCl₃):
6.72 (s, 4H, -CH=CH-), 5.12-5.14 (m, 2H, -(C=O)-O-CH-), 3.58-3.71 (m, 4H, N-CH₂-), 2.22 (t, 4H, -O-(C=O)-CH₂-), 1.54 (brs, 4H, -CH₂-), 1.22-1.42 (m, 8H, -CH₂-), 1.24 (d, 6H, -CH₃).
¹³C NMR (100 MHz, CDCl₃):
173.3 [-(C=O)-O-], 170.5 [N-(C=O)], 134.1 (-CH=CH-), 68.0 [-(C=O)-O-CH-], 41.9 (-N-CH₂-), 34.2 [-O-(C=O)-CH₂-], 29.0 (-CH₂-), 28.9 (-CH₂-), 24.6 (-CH₂-), 17.6 (-CH₃).

### (Synthesis Example 2)

### Synthesis of Maleimide Compound 1-2

### [Formula 15]

### Structure of Maleimide Compound 1-2

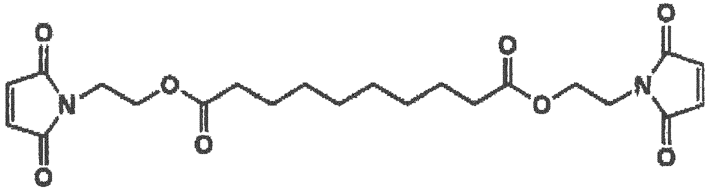

In the same manner as in Synthesis Example 1 except that 4.55 g of N-β-hydroxyethyl maleimide synthesized by the same method as described previously was used in place of 5.0 g of N-β-hydroxypropyl maleimide described previously, 3.3 g of maleimide compound 1-2 was obtained. This maleimide compound 1-2 was solid at room temperature.

The chemical structure of the obtained maleimide compound 1-2 was confirmed by an NMR measurement.
¹H NMR (400 MHz, CDCl₃):
6.73 (s, 4H, -CH=CH-), 4.23 (t, 4H, -(C=O)-O-CH₂-), 3.79 (t, 4H, N-CH₂-), 2.26 (t, 4H, -O-(C=O)-CH₂-), 1.57 (t, 4H, -CH₂-), 1.27 (s, 8H, -CH₂-).
¹³C NMR (100 MHz, CDCl₃):
173.5 [-(C=O)-O-], 170.4 [N-(C=O)], 134.2 (-CH=CH-), 61.1 [-(C=O)-O-CH₂-], 36.9 (-N-CH₂-), 33.9 [-O-(C=O)-CH₂-], 28.9 (2C) (-CH₂-), 24.6 (-CH₂-).

### (Synthesis Example 3)

### Synthesis of Maleimide Compound 1-3

### [Formula 16]

### Structure of Maleimide Compound 1-3

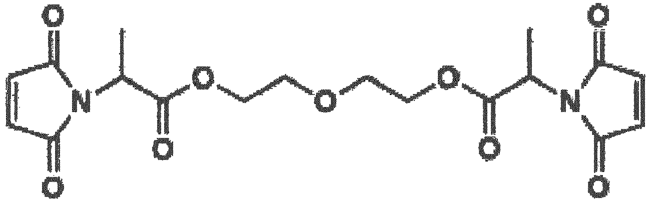

2-Maleimide-2-methyl acetic acid was synthesized using a method described in Japanese Patent No. 3599160. A 300 ml recovery flask equipped with a stirrer, a decompression apparatus, and a trap is then charged with 33.8 g of the 2-maleimide-2-methyl acetic acid, 10.2 g of diethylene glycol, 4.47 g of p-toluenesulfonic acid monohydrate, 0.35 g of 2,6-tert-butyl-p-cresol, and 20 ml of toluene in this order. And the resultant mixture was reacted with stirring at a reaction temperature of 80°C for 5 hours while azeotropically distilling off the produced water and toluene under reduced pressure. A solution obtained after the completion of the reaction was cooled to room temperature, dissolved in 300 ml of ethyl acetate, washed 3 times in 100 ml of a saturated aqueous solution of sodium hydrogencarbonate, and washed once in 100 ml of a saturated saline solution. The obtained organic layer was dried over magnesium sulfate, and then condensed to obtain 24.7 g of maleimide compound 1-3. This maleimide compound 1-3 was solid at room temperature.

The chemical structure of the obtained maleimide compound 1-3 was confirmed by an NMR measurement.
¹H NMR (400 MHz, CDCl₃):
6.75 (s, 4H, -CH=CH-), 4.82 (q, 2H, N-CH-), 4.20-4.32 (m, 4H, -(C=O)-O-CH₂-), 3.58-3.67 (m, 4H, -CH₂-O-), 1.59 (d, 2H, -CH₃).
¹³C NMR (100 MHz, CDCl₃):
169.7 [N-(C=O)], 169.5 [-(C=O)-O-], 134.3 (-CH=CH-), 68.7 [-(C=O)-O-CH₂-], 64.6 (-CH₂-O-), 47.4 (-CH-), 15.1 (-CH₃).

### (Synthesis Example 4)

### Synthesis of Maleimide Compound 1-4

### [Formula 17]

### Structure of Maleimide Compound 1-4

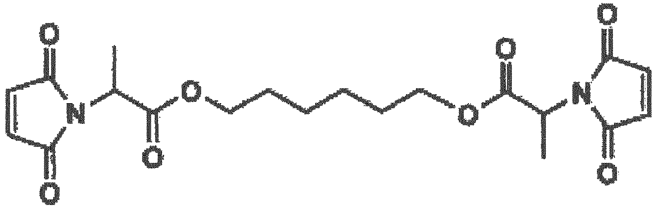

In the same manner as in Synthesis Example 3 except that 11.4 g of 1,6-hexanediol was used in place of 10.2 g of diethylene glycol, 25.4 g of maleimide compound 1-4 was obtained. This maleimide compound 1-4 was solid at room temperature.

The chemical structure of the obtained maleimide compound 1-4 was confirmed by an NMR measurement.
¹H NMR (400 MHz, CDCl₃):
6.75 (s, 4H, -CH=CH-), 4.77 (q, 2H, N-CH-), 4.07-4.17 (m, 4H, -(C=O)-O-CH₂-), 1.63 (d, 6H, -CH₃), 1.58-1.63 (m, 4H, -CH₂-), 1.24-1.33 (m, 4H, -CH₂-).
¹³C NMR (100 MHz, CDCl₃):
169.8 [N-(C=O)], 169.5 [-(C=O)-O-], 134.2 (-CH=CH-), 65.5 [-(C=O)-O-CH₂-], 47.4 (N-CH-), 28.1 (-CH₂-), 25.1 (-CH₂-), 15.0 (-CH₃).

### (Synthesis Example 5)

### Synthesis of Maleimide Compound 1-5

### [Formula 18]

### Structure of Maleimide Compound 1-5

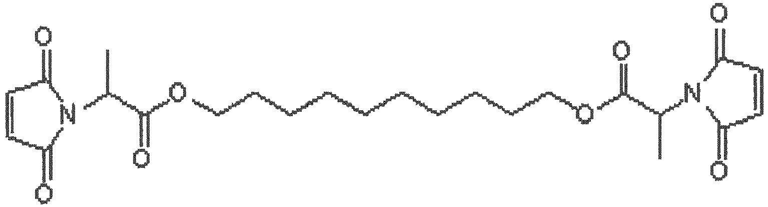

In the same manner as in Synthesis Example 3 except that 16.7 g of 1,10-decanediol was used in place of 10.2 g of diethylene glycol, 22.3 g of maleimide compound 1-5 was obtained. This maleimide compound 1-5 was solid at room temperature.

The chemical structure of the obtained maleimide compound 1-5 was confirmed by an NMR measurement.
¹H NMR (400 MHz, CDCl₃):
6.74 (s, 4H, -CH=CH-), 4.78 (q, 2H, N-CH-), 4.08-4.18 (m, 4H, -(C=O)-O-CH₂-), 1.58-1.65 (m, 10H, -CH₂-, -CH₃), 1.20-1.28 (m, 12H, -CH₂-).
¹³C NMR (100 MHz, CDCl₃):
169.8 [N-(C=O)], 169.6 [-(C=O)-O-], 134.3 (-CH=CH-), 65.8 [-(C=O)-O-CH₂-], 47.5 (N-CH-), 29.1 (-CH₂-), 28.9 (-CH₂-), 28.0 (-CH₂-), 25.4 (-CH₂-), 25.0 (-CH₂-), 15.1 (-CH₃).

### Example 1

### Preparation of Pigment Dispersion Liquid 1

Pigment dispersion liquid 1 was prepared by mixing the following components and conducting a dispersive mixing with a paint shaker together with zirconia beads having a particle size of 0.5 mm for 6 hours.

### [Composition of Pigment Dispersion Liquid 1]

Maleimide compound 1-1: 56.7 g

### Maleimide compound 1-4: 5.6 g (corresponding to an equivalent ratio of 10% based on maleimide compound 1-1)

TEGDVE (triethylene glycol divinyl ether): 26.7 g
Carbon black: 2.0 g
Solsperse 24000GR (produced by The Lubrizol Corporation): 1.0 g
TEMPO (2,2,6,6-tetramethylpiperidinyl-N-oxyl): 0.1 g

### Manufacturing of Ink 1

Inkjet ink 1 was manufactured by mixing and dissolving the following components into the obtained pigment dispersion liquid 1. The equivalent ratio of divinyl ether/maleimide compound (sum total) in the obtained ink was 50/50.

### [Composition of Ink]

Pigment dispersion liquid 1: 92.0 g
DAROCURE TPO (phosphine oxide-based photoinitiator produced by BASF SE): 5.0 g
Quantacure ITX (thioxanthone-based photosensitizer produced by Aceto Chemical Co., Inc.): 3.0 g

### Example2

Inkjet ink 2 was manufactured in the same manner as in Example 1 except that pigment dispersion liquid 1 was changed to pigment dispersion liquid 2 of the following composition.

### [Composition of Pigment Dispersion Liquid 2]

Maleimide compound 1-1: 57.5 g
1,6-bismaleimide-(2,2,4-trimethyl)hexane (BMI-TMH produced by Daiwakasei Industry Co., Ltd.): 4.3 g (corresponding to an equivalent ratio of 10% based on maleimide compound 1-1)
TEGDVE: 27.1 g
Carbon black: 2.0 g
Solsperse 24000GR (produced by The Lubrizol Corporation): 1.0 g
TEMPO: 0.1 g

### Example 3

Inkjet ink 3 was manufactured in the same manner as in Example 1 except that pigment dispersion liquid 1 was changed to pigment dispersion liquid 3 of the following composition.

### [Composition of Pigment Dispersion Liquid 3]

Maleimide compound 1-1: 55.4 g
Bisphenol A diphenyl ether bismaleimide (BMI-4000 produced by Daiwakasei Industry Co., Ltd.): 7.4 g (corresponding to an equivalent ratio of 10% based on maleimide compound 1-1)
TEGDVE: 26.1 g
Carbon black: 2.0 g
Solsperse 24000GR (produced by The Lubrizol Corporation): 1.0 g
TEMPO: 0.1 g

### Example 4

Inkjet ink 4 was manufactured in the same manner as in Example 1 except that pigment dispersion liquid 1 was changed to pigment dispersion liquid 4 of the following composition.

### [Composition of Pigment Dispersion Liquid 4]

Maleimide compound 1-1: 56.5 g
3,3'-dimethyl-5,5'-diethyl-4,4'-diphenyhmethane bismaleimide (BMI-5100 produced by Daiwakasei Industry Co., Ltd.): 5.8 g (corresponding to an equivalent ratio of 10% based on maleimide compound 1-1)
TEGDVE: 26.6 g
Carbon black: 2.0 g
Solsperse 24000GR (produced by The Lubrizol Corporation): 1.0 g
TEMPO: 0.1 g

### Example 5

Inkjet ink 5 was manufactured in the same manner as in Example 1 except that pigment dispersion liquid 1 was changed to pigment dispersion liquid 5 of the following composition.

### [Composition of Pigment Dispersion Liquid 5]

Maleimide compound 1-1: 58.8 g
N-phenyl maleimide (Imilex-P produced by Nippon Shokubai Co., Ltd.): 2.4 g (corresponding to an equivalent ratio of 10% based on maleimide compound 1-1)
TEGDVE: 27.7 g
Carbon black: 2.0 g
Solsperse 24000GR (produced by The Lubrizol Corporation): 1.0 g
TEMPO: 0.1 g

### Example 6

Inkjet ink 6 was manufactured in the same manner as in Example 1 except that pigment dispersion liquid 1 was changed to pigment dispersion liquid 6 of the following composition.

### [Composition of Pigment Dispersion Liquid 6]

Maleimide compound 1-1: 58.8 g
N-cyclohexyl maleimide (Imilex-C produced by Nippon Shokubai Co., Ltd.): 2.5 g (corresponding to an equivalent ratio of 10% based on maleimide compound 1-1)
TEGDVE: 27.7 g
Carbon black: 2.0 g
Solsperse 24000GR (produced by The Lubrizol Corporation): 1.0 g
TEMPO: 0.1 g

### Example 7

Inkjet ink 7 was manufactured in the same manner as in Example 1 except that pigment dispersion liquid 1 was changed to pigment dispersion liquid 7 of the following composition.

### [Composition of Pigment Dispersion Liquid 7]

Maleimide compound 1-1: 58.9 g
Diethyl maleate (DEM produced by Daihachi Chemical Industry Co., Ltd.): 2.4 g (corresponding to an equivalent ratio of 10% based on maleimide compound 1-1)
TEGDVE: 27.7 g
Carbon black: 2.0 g
Solsperse 24000GR (produced by The Lubrizol Corporation): 1.0 g
TEMPO: 0.1 g

### Example 8

Inkjet ink 8 was manufactured in the same manner as in Example 1 except that pigment dispersion liquid 1 was changed to pigment dispersion liquid 8 of the following composition.

### [Composition of Pigment Dispersion Liquid 8]

Maleimide compound 1-1: 58.9 g
Diethyl fumarate (DEF produced by Kurogane Kasei Co., Ltd.): 2.4 g (corresponding to an equivalent ratio of 10% based on maleimide compound 1-1)
TEGDVE: 27.7 g
Carbon black: 2.0 g
Solsperse 24000GR (produced by The Lubrizol Corporation): 1.0 g
TEMPO: 0.1 g

### Example 9

Inkjet ink 9 was manufactured in the same manner as in Example 1 except that pigment dispersion liquid 1 was changed to pigment dispersion liquid 9 of the following composition.

### [Composition of Pigment Dispersion Liquid 9]

Maleimide compound 1-4: 54.9 g
1,6-bismaleimide-(2,2,4-trimethyl)hexane (BMI-TMH produced by Daiwakasei Industry Co., Ltd.): 4.6 g (corresponding to an equivalent ratio of 10% based on maleimide compound 1-4)
TEGDVE: 29.4 g
Carbon black: 2.0 g
Solsperse 24000GR (produced by The Lubrizol Corporation): 1.0 g
TEMPO: 0.1 g

### Example 10

Inkjet ink 10 was manufactured in the same manner as in Example 1 except that pigment dispersion liquid 1 was changed to pigment dispersion liquid 10 of the following composition.

### [Composition of Pigment Dispersion Liquid 10]

Maleimide compound 1-4: 53.8 g
3,3'-dimethyl-5,5'-diethyl-4,4'-diphenyhmethane bismaleimide (BMI-5100 produced by Daiwakasei Industry Co., Ltd.): 6.3 g (corresponding to an equivalent ratio of 10% based on maleimide compound 1-4)
TEGDVE: 28.8 g
Carbon black: 2.0 g
Solsperse 24000GR (produced by The Lubrizol Corporation): 1.0 g
TEMPO: 0.1 g

### Example 11

Inkjet ink 11 was manufactured in the same manner as in Example 1 except that pigment dispersion liquid 1 was changed to pigment dispersion liquid 11 of the following composition.

### [Composition of Pigment Dispersion Liquid 11]

Maleimide compound 1-5: 56.7 g
Maleimide compound 1-4: 5.5 g (corresponding to an equivalent ratio of 10% based on maleimide compound 1-5)
TEGDVE: 26.7 g
Carbon black: 2.0 g
Solsperse 24000GR (produced by The Lubrizol Corporation): 1.0 g
TEMPO: 0.1 g

### Example 12

Inkjet ink 12 was manufactured in the same manner as in Example 1 except that pigment dispersion liquid 1 was changed to pigment dispersion liquid 12 of the following composition.

### [Composition of Pigment Dispersion Liquid 12]

Maleimide compound 1-3: 54.3 g
1,6-bismaleimide-(2,2,4-trimethyl)hexane (BMI-TMH produced by Daiwakasei Industry Co., Ltd.): 4.7 g (corresponding to an equivalent ratio of 10% based on maleimide compound 1-3)
TEGDVE: 29.9 g
Carbon black: 2.0 g
Solsperse 24000GR (produced by The Lubrizol Corporation): 1.0 g
TEMPO: 0.1 g

### Example 13

Inkjet ink 13 was manufactured in the same manner as in Example 1 except that pigment dispersion liquid 1 was changed to pigment dispersion liquid 13 of the following composition.

### [Composition of Pigment Dispersion Liquid 13]

Maleimide compound 1-3: 53.2 g
3,3'-dimethyl-5,5'-diethyl-4,4'-diphenyhmethane bismaleimide (BMI-5100 produced by Daiwakasei Industry Co., Ltd.): 6.4 g (corresponding to an equivalent ratio of 10% based on maleimide compound 1-3)
TEGDVE: 29.3 g
Carbon black: 2.0 g
Solsperse 24000GR (produced by The Lubrizol Corporation): 1.0 g
TEMPO: 0.1 g

### Example 14

Inkjet ink 14 was manufactured in the same manner as in Example 1 except that pigment dispersion liquid 1 was changed to pigment dispersion liquid 14 of the following composition.

### [Composition of Pigment Dispersion Liquid 14]

Maleimide compound 1-1: 58.3 g
Maleimide compound 1-4: 2.88 g (corresponding to an equivalent ratio of 5% based on maleimide compound 1-1)
TEGDVE: 27.7 g
Carbon black: 2.0 g
Solsperse 24000GR (produced by The Lubrizol Corporation): 1.0 g
TEMPO: 0.1 g

### Example 15

Inkjet ink 15 was manufactured in the same manner as in Example 1 except that pigment dispersion liquid 1 was changed to pigment dispersion liquid 15 of the following composition.

### [Composition of Pigment Dispersion Liquid 15]

Maleimide compound 1-1: 43.4 g
Maleimide compound 1-4: 17.5 g (corresponding to an equivalent ratio of 30% based on maleimide compound 1-1)
TEGDVE: 28.0 g
Carbon black: 2.0 g
Solsperse 24000GR (produced by The Lubrizol Corporation): 1.0 g
TEMPO: 0.1 g

### Example 16

Inkjet ink 16 was manufactured in the same manner as in Example 1 except that pigment dispersion liquid 1 was changed to pigment dispersion liquid 16 of the following composition.

### [Composition of Pigment Dispersion Liquid 16]

Maleimide compound 1-2: 55.4 g
Maleimide compound 1-4: 5.8 g (corresponding to an equivalent ratio of 10% based on maleimide compound 1-2)
TEGDVE: 27.7 g
Carbon black: 2.0 g
Solsperse 24000GR (produced by The Lubrizol Corporation): 1.0 g
TEMPO: 0.1 g

### Example 17

Inkjet ink 17 was manufactured in the same manner as in Example 1 except that pigment dispersion liquid 1 was changed to pigment dispersion liquid 17 of the following composition.

### [Composition of Pigment Dispersion Liquid 17]

Maleimide compound 1-1: 56.7 g
Maleimide compound 1-4: 3.0 g (corresponding to an equivalent ratio of 5% based on maleimide compound 1-1)
1,6-bismaleimide-(2,2,4-trimethyl)hexane (BMI-TMH produced by Daiwakasei Industry Co., Ltd.): 2.5 g (corresponding to an equivalent ratio of 5% based on maleimide compound 1-1)
TEGDVE: 26.7 g
Carbon black: 2.0 g
Solsperse 24000GR (produced by The Lubrizol Corporation): 1.0 g
TEMPO: 0.1 g

### Comparative Example 1

Inkjet ink 18 was manufactured in the same manner as in Example 1 except that pigment dispersion liquid 1 was changed to pigment dispersion liquid 18 of the following composition.

### [Composition of Pigment Dispersion Liquid 18]

Maleimide compound 1-1: 62.4 g
TEGDVE: 26.5 g
Carbon black: 2.0 g
Solsperse 24000GR (produced by The Lubrizol Corporation): 1.0 g
TEMPO: 0.1 g

### Comparative Example 2

Inkjet ink 19 was manufactured in the same manner as in Example 1 except that pigment dispersion liquid 1 was changed to pigment dispersion liquid 19 of the following composition.

### [Composition of Pigment Dispersion Liquid 19]

Maleimide compound 1-1: 59.0 g
Triethylene glycol (TEG produced by Maruzen Petrochemical Co., Lid.): 2.1 g (corresponding to an equivalent ratio of 10% based on maleimide compound 1-1)
TEGDVE: 27.8 g
Carbon black: 2.0 g
Solsperse 24000GR (produced by The Lubrizol Corporation): 1.0 g
TEMPO: 0.1 g

### Comparative Example 3

Inkjet ink 20 was manufactured in the same manner as in Example 1 except that pigment dispersion liquid 1 was changed to pigment dispersion liquid 20 of the following composition.

### [Composition of Pigment Dispersion Liquid 20]

Maleimide compound 1-1: 55.5 g
Dimethylformamide (DMF produced by Mitsubishi Gas Chemical Co., Inc.): 1.0 g (corresponding to an equivalent ratio of 10% based on maleimide compound 1-1)
TEGDVE: 33.4 g
Carbon black: 2.0 g
Solsperse 24000GR (produced by The Lubrizol Corporation): 1.0 g
TEMPO: 0.1 g

The melting point Tm1 (°C) of the first maleimide compound used in the ink of Examples and Comparative Examples and the melting point Tm2 (°C) of the mixture of the first maleimide compound and the second maleimide compound etc. were measured by the following method.

### Measurement of Melting Point

1) The melting point (Tm1) of the first maleimide compound was measured by using a DSC 6000 manufactured by Seiko Instruments Inc. by the method according to JIS K0064.
2) On the other hand, a mixture was obtained by mixing the first maleimide compound and the second maleimide compound etc. in such a way that the content ratio of the mixture was the same as the content ratio in the ink prepared in each Example or Comparative Example. The melting point (Tm2) of the obtained mixture was measured in the same way as in the measurement of the melting point (Tm1).
3) The difference of the melting points ΔTm (= Tm1 - Tm2) was measured from the melting points Tm1 and Tm2 obtained in 1) and 2) described above.

Furthermore, the precipitation property, the ejection property, the photocuring sensitivity, and the gloss of image were evaluated by the following method.

### (Precipitation Property)

The obtained ink was placed in a bottle and kept in a refrigerator at -20°C for 3 to 7 days. After that, the precipitation property of the ink was visually observed when the bottle containing ink was taken out from the refrigerator after 3 days and 7 days and the temperature of the ink was brought back to normal temperature. The evaluation of the precipitation of the ink was carried out by the following criteria.
⊚: Precipitation was not observed after 7 days.
○: Precipitation was not observed after 3 days, but observed after 7 days.
×: Precipitation was observed after 3 days.

### (Ejection Property)

The ink kept at -20°C for 3 days was loaded in a UV curing-type printer equipped with a piezo head 512L manufactured by Konica Minolta U Technologies, Inc. And the temperature of the head was set at "the temperature equal to or less than 75°C at which the viscosity of the ink became 10 mPa·s" or "75°C" in the case where the viscosity of the ink exceeds 10 mPa·s even at 75°C. And the ink equal to an amount of 1 L was continuously ejected for 60 minutes under the conditions of a droplet volume of 42 pl and a frequency of 8 kHz. And the ejection property of the ink was evaluated by counting the number of nozzle ejection failures. The evaluation of the ejection property of the ink was carried out by the following criteria.
⊚: No nozzle ejection failure was observed.
○: The number of nozzle ejection failures was 1 or more and less than 3% based on the total nozzles.
Δ: The number of nozzle ejection failures was 3% or more and less than 10% base on the total nozzles.
×: The number of nozzle ejection failures was 10% or more based on the total nozzles.

### (Photocuring Sensitivity)

The ink kept at -20°C for 3 days in the same manner as described previously was loaded in a UV curing-type printer equipped with a piezo head 512L manufactured by Konica Minolta U Technologies, Inc. After a solid image with a resolution of 720 x 720 dpi was formed on a PET substrate, UV light was irradiated thereon with a high pressure mercury lamp in a stepwise fashion so that the light quantity irradiated became 10, 30, and 100 mJ/cm². The extent of curing was observed by touching the solid image after the irradiation of each light quantity. The evaluation of the photocuring sensitivity was carried out by the following criteria.
⊚: The image was cured by a light quantity of 10 mJ/cm².
○: The image was not cured by a light quantity of 10 mJ/cm², but cured by a light quantity of 30 mJ/cm².
Δ: The image was not cured by a light quantity of 30 mJ/cm², but cured by a light quantity of 100 mJ/cm².
×: The image was not cured by a light quantity of 100 mJ/cm².

### (Gloss of Image)

The gloss of the solid image formed on the PET substrate in the same manner as described previously was visually observed. The evaluation of the gloss of the image was carried out by the following criteria.
⊚: Highly excellent in gloss feeling.
○: Excellent in gloss feeling.
×: Inferior in gloss feeling.

**[Table 1]**

| | First maleimide compound | Second male imide compound or derivative of butenedioic acid | Vinyl ether compound | Equivalent ratio of first/second | Difference of melting points ΔTm (°C) | Precipitation property | Ejection property | Photocuring sensitivity | Gloss of image |
|---|---|---|---|---|---|---|---|---|---|
| Example 1 | Maleimide compound 1-1 | Maleimide compound 1-4 | TEGDVE | 100/10 | 87 | ⊚ | ⊚ | ⊚ | ⊚ |
| Example 2 | | BMI-TMH | | | 86 | ⊚ | ⊚ | ⊚ | ⊚ |
| Example 3 | | BMI-4000 | | | 80 | ⊚ | ○ | ⊚ | ○ |
| Example 4 | | BMI-5100 | | | 82 | ⊚ | ○ | ⊚ | ○ |
| Example 5 | | Imilex-P | | | 40-50 | ○ | ○ | ⊚ | ○ |
| Example 6 | | Imilex C | | | 40-50 | ○ | ○ | ⊚ | ○ |
| Example 7 | | DEM | | | 40-50 | ○ | ⊚ | ⊚ | ○ |
| Example 8 | | DEF | | | 40-50 | ○ | ⊚ | ⊚ | ○ |
| Example 9 | Maleimide compound 1-4 | BMI -TMH | | | 40≤ | ⊚ | ⊚ | ⊚ | ⊚ |
| Example 10 | | BMI - 5100 | | | 40< | ⊚ | ○ | ⊚ | ○ |
| Example 11 | Maleimide compound 1-5 | Maleimide compound 1-4 | | | 88 | ⊚ | ⊚ | ⊚ | ⊚ |
| Example 12 | Maleimide compound 1-3 | BMITMH | | | 40≤ | ⊚ | ○ | ○ | ⊚ |
| Example 13 | | BMI-5100 | | | 40≤ | ⊚ | ○ | ○ | ○ |
| Example 14 | Maleimide compound 1-1 | Maleimide compound 1-4 | | 100/5 | 40 50 | ○ | ⊚ | ⊚ | ⊚ |
| Example 15 | | | | 100/30 | 40≤ | ⊚ | ⊚ | ⊚ | ⊚ |
| Example 16 | Maleimide compound 1-2 | Maleimide compound 1-4 | | 100/10 | 40≤ | ⊚ | ○ | ○ | ○ |
| Example 17 | Maleimide compound 1-1 | Maleimide compound 1-4 /BMI-TMH | | 100 /5/5 | 40≤ | ⊚ | ⊚ | ⊚ | ⊚ |
| Comparative Example 1 | Maleimide compound 1-1 | - | TEGDVE | - | 0 | × | × | ⊚ | ○ |
| Comparative Example 2 | Maleimide compound 1-1 | TEG | | 100/10 | 35-55 | × | × | Δ | ○ |
| Comparative Example 3 | Maleimide compound 1-1 | DMF | | | 35-85 | × | × | Δ | × |

As shown in Table 1, it is understood that the inkjet inks of Examples 1 to 17 do not cause precipitation even at a low temperature and are excellent in ejection property and so on. On the other hand, it is understood that inkjet inks of Comparative Examples 1 to 3 are excellent in ejection property and so on but cause precipitation at a low temperature.

### Industrial Applicability

According to the present invention, a photocurable inkjet ink including a maleimide compound in which precipitation at a low temperature is suppressed can be provided.

## Claims

1. A photocurable inkjet ink comprising:
a first maleimide compound represented by the following general formula (1); and
at least one of a second maleimide compound having a chemical structure different from that of the first maleimide compound and a derivative of butenedioic acid
[Formula 1] 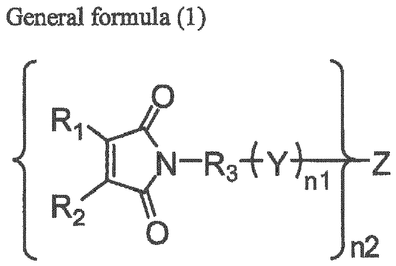 wherein
R₁ and R₂ each independently represent a hydrogen atom or a C₁₋₆ alkyl group, and R₁ and R₂ may combine with each other to form a ring;
R₃ represents an alkylene group having a chain carbon number of 1 to 3;
Y represents a divalent linking group selected from the group consisting of -O-, -(C=O)-, -O-(C=O)-, -(C=O)-O-, -OR₄-, -R₄-O-(C=O)-, -(C=O)-O-R₄-, -O-(C=O)-R₄-(C=O)-O-, and -(C=O)-O-R₄-O-(C=O)- where R₄ represents a C₁₋₁₂ alkylene group or a C₆₋₁₈ arylene group;
n1 represents 0 or 1;
n2 represents a natural number from 1 to 6;
when n2 is 1, Z represents an alkyl group having a molecular weight of 15 to 600, an alkyloxy group having a molecular weight of 31 to 600, or an aryl group; and
when n2 is 2 to 6, Z represents an alkylene group having a molecular weight of 14 to 600, an alkyleneoxy group having a molecular weight of 30 to 600, or an arylene group.

2. The photocurable inkjet ink according to claim 1,
wherein when a melting point of the first maleimide compound is defined as Tm1 (°C), and
a melting point of a mixture obtained by mixing the first maleimide compound and at least one of the second maleimide compound and the derivative of butenedioic acid at the same ratio as a content ratio of the first maleimide compound contained in the photocurable inkjet ink to at least one of the second maleimide compound and the derivative of butenedioic acid contained in the photocurable inkjet ink is defined as Tm2 (°C),
a difference of the melting points ΔTm (Tm1 - Tm2) is 40°C or more.

3. The photocurable inkjet ink according to claim 1 or 2,
wherein R₃ in the general formula (1) has an asymmetric carbon atom in an α position or a β position relative to a nitrogen atom constituting a maleimide ring.

4. The photocurable inkjet ink according to claim 1 or 2, wherein in the general formula (1),
R₃ has an asymmetric carbon atom in an α position or a β position relative to a nitrogen atom constituting a maleimide ring;
Y represents -O-(C=O)- or -(C=O)-O-;
n1 represents 1;
n2 represents 1 or 2;
when n2 is 1, Z represents an alkyl group having a molecular weight of 15 to 600, or an alkyloxy group having a molecular weight of 31 to 600; and
when n2 is 2, Z represents an alkylene group having a molecular weight of 14 to 600, or an alkyleneoxy group having a molecular weight of 30 to 600.

5. The photocurable inkjet ink according to any one of claims 1 to 4, wherein the first maleimide compound has a molecular weight of 420 or more.

6. The photocurable inkjet ink according to any one of claims 1 to 5, wherein the second maleimide compound is a maleimide compound represented by the general formula (1).

7. The photocurable inkjet ink according to any one of claims 1 to 6, wherein the second maleimide compound is a mixture of two or more of the second maleimide compounds.

8. The photocurable inkjet ink according to any one of claims 1 to 7, wherein a total amount of the second maleimide compound and the derivative of butenedioic acid is 5 to 30 mol% based on the first maleimide compound.

9. The photocurable inkjet ink according to any one of claims 1 to 8, wherein a total amount of the first maleimide compound, the second maleimide compound, and the derivative of butenedioic acid is 35 to 65 wt% based on the photocurable inkjet ink.

10. The photocurable inkjet ink according to any one of claims 1 to 9, further comprising at least a polymerizable compound,
wherein the polymerizable compound is a vinyl ether compound or a N-vinyl compound.
